# EUROPEAN PATENT SPECIFICATION

(11) **EP 3 346 571 B1**
(45) Date of publication and mention of the grant of the patent: **27.12.2023**
(21) Application number: 16840778.1
(22) Date of filing: 26.08.2016
(51) Int. Cl.: B60L 53/67, B60L 53/60, H02J 7/00, B60L 53/62, B60L 53/10, B60L 53/30

(54) **POWER MATCHING METHOD OF MATRIX POWER DISTRIBUTION CHARGING SYSTEM**
LEISTUNGSANPASSUNGSVERFAHREN EINES LADESYSTEMS MIT MATRIXLEISTUNGSVERTEILUNG
PROCÉDÉ D'ADAPTATION DE PUISSANCE D'UN SYSTÈME DE CHARGE À DISTRIBUTION DE PUISSANCE MATRICIELLE

(30) Priority: 01.09.2015 CN 201510551423
(43) Date of publication of application: 11.07.2018
(73) Proprietor: Xi'an TELD Intelligent Charging Technology Co., Ltd., Shaanxi (CN)
(72) Inventor: YUAN, Qingmin, Xi'an Shaanxi 710065 (CN)
(74) Representative: Rössler, Matthias
(86) International application number: PCT/CN2016/096809
(87) International publication number: WO 2017/036349

(56) References cited:
- EP-A1- 2 110 923
- EP-A2- 2 388 884
- CN-A- 105 375 552
- CN-U- 204 538 735
- CN-Y- 201 374 569
- DE-A1-102012 007 158
- US-A1- 2011 291 616
- US-A1- 2014 347 017

## Description

### Field of the Invention

The present disclosure belongs to the technical field of electric vehicle charging, and relates to a power matching method for a matrix power distribution charging system.

### Background of the Invention

With the progress of society and the enhancement of environmental awareness, electric vehicles are gradually gaining popularity because they are powered by built-in power supply and can solve the problems of environmental pollution caused by exhaust emission and high energy consumption of fuel vehicles. However, the charging of electric vehicles is an issue of great concern to people, which is related to the popularization and promotion of electric vehicles.

In actual use of a matrix charging structure, there is often a change in positions of direct current modules in a cabinet due to maintenance of the direct current modules. A charging cabinet generally includes multiple direct current modules, and when the position of each direct current modules is changed, the switch devices in power distribution units (PDUs) cannot be correctly matched with actual corresponding power supply modules, then normal charging cannot be achieved, and eventually, technical personnel have to manually detect and adjust a connection relationship between the power distribution units and the direct current modules, which affects the normal charging of a charging station.

EP 2 388 884 A2 relates to a method and a device for simultaneously charging a plurality of users based on charging amount information predefined by the users, wherein two or more power conversion units can be connected to each other by switching corresponding switches on or off to output different values in accordance with the charging amount information.

### Summary of the Invention

The invention is defined by the appended independent claims. Dependent claims constitute embodiments of the invention.

An objective of the present disclosure is to provide a power matching method for a matrix power distribution charging system in order to solve the problem that normal charging cannot be achieved because correct matching of power distribution units and direct current modules in the matrix power distribution system cannot be realized.

In order to achieve the above objective, the present disclosure adopts the following technical solutions.

The present disclosure provides a power matching method for a matrix power distribution charging system. The matrix power distribution charging system includes at least two direct current modules and a plurality of power distribution units , the direct current modules and the power distribution units are respectively connected to a charge control unit, each of the power distribution units comprises switch devices whose number equals to the number of the direct current modules, each of the direct current modules are connectable to each of the power distribution units through one of the switch devices, and each of the power distribution units corresponds to a parking space and is used as a charging source.

The power matching method comprises steps of: sending orders to the direct current modules by the charge control unit after commissioning of the matrix power distribution charging system, so as to order the direct current modules to output voltages with different specific values; meanwhile, sampling voltages at the terminal directly connected to the direct current modules of each of the switch devices by the power distribution units through a sampling circuit and sending the sampled voltages to the charge control unit by the power distribution units; and comparing the received sampled voltages with the voltages outputted by each of the direct current modules for determining a corresponding relation between each of the switch devices and each of the direct current modules; finally, logically computing by the charge control unit according to actual power requirements of parking spaces so as to send control orders to the power distribution units, and switching on or off each of the switch devices by the power distribution units according to the received control orders to connect to a certain direct current module combination to correctly outputs a certain power.

Further, the present disclosure provides a power matching method for a matrix power distribution charging system, wherein the matrix power distribution charging system comprises at least two direct current modules and a plurality of power distribution units, wherein the direct current modules and the power distribution units are respectively connected to a charge control unit; each of the power distribution units comprises switch devices whose number equals to the number of the direct current modules, and each of the direct current modules are connectable to each of the power distribution units through one of the switch devices; each of the power distribution units corresponds to a parking space and is used as a charging source; wherein the method includes the following steps:
(1) broadcasting a state order by the charge control unit for indicating that the switch devices begin to match with the direct current modules;
(2) sending messages to each of the direct current modules one by one by the charge control unit to order the direct current modules to output voltages with specific values; meanwhile, receiving the messages by the power distribution units to know the specific values of the voltages to be outputted by the direct current modules;
(3) respectively outputting the voltages with specific values by the direct current modules according to the messages sent by the charge control unit;
(4) sampling the voltages at the terminal directly connected to the direct current modules of each of the switch devices by the power distribution units through the sampling circuit, comparing the sampled values of the voltages with the values of the voltages outputted by the direct current modules for finding out which switch device and which direct current module have a similar value, and establishing a one-to-one corresponding relation;
(5) sending a matching success message to the charge control unit by each of the power distribution units if matching succeeds after the corresponding relation is established between the switch devices and the direct current modules; or sending a matching failure message to the charge control unit if matching fails; and
(6) broadcasting a matching complete state to the matrix power distribution charging system when the charge control unit receives all matching messages of the power distribution units, and logically computing by the charge control unit according to actual power requirements of parking spaces so as to send control orders to the power distribution units, and switching on or off each of the switch devices by the power distribution units according to the received control orders to connect to a certain direct current module combination to correctly output a certain power.

Preferably , the switch devices are switch relays; each of the power distribution units further comprises an analog-digital (AD) sampling circuit and a microcontroller unit (MCU); the switch relays are switched on or off by the microcontroller unit (MCU), and voltages at the terminal directly connected to the direct current modules of each of the switch relays are sampled by the analog-digital (AD) sampling circuit.

Preferably , the direct current modules and the power distribution units are respectively connected to and communicate with the charge control unit by a controller area network (CAN) bus.

Preferably , the charge control unit comprises a microcontroller unit (MCU).

An objective of the present disclosure is to provide a matrix switch address allocation method in order to solve a switch address allocation problem in a matrix charging method.

The present disclosure has the following beneficial effect.
(1) The matrix power distribution charging system of the present disclosure includes at least two direct current modules and a plurality of power distribution units, the direct current modules and the power distribution units are respectively connected to a charge control unit, so that automatic matching of switch devices in the power distribution units (PDUs) and the direct current modules can be realized by using the existing resources in the system without requiring other special resources (e.g. dip switches).
(2) The automatic matching method is result-oriented, has no strict requirement for the wiring between the direct current modules and the power distribution units, and can still be correctly implemented even if the wiring is misplaced.
(3) According to the matrix switch connection mode, a charging parking space can be connected to each direct current module through a corresponding switch device, thereby achieving a wide-range flexible power distribution between the direct current module resources and charging spaces.

### Brief Description of the Drawings

Fig. 1 is a functional block diagram of a matrix power distribution charging system according to the present disclosure;
Fig. 2 is a schematic system diagram of the matrix power distribution charging system according to the present disclosure; and
Fig. 3 is a schematic diagram of a PDU control system according to the present disclosure.

### Detailed Description of the Embodiments

The present disclosure will be described in detail below with reference to the drawings and specific examples.

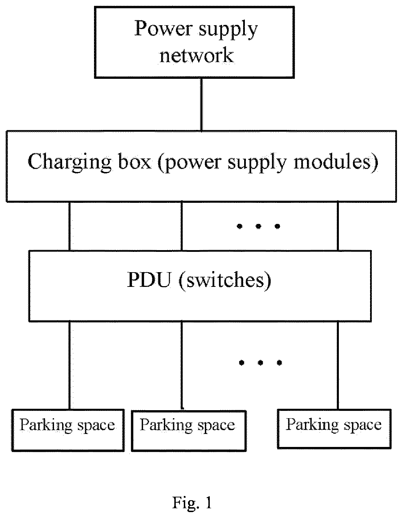

As shown in Fig. 1 to Fig. 3, a three-phase alternating current voltage is outputted from a power supply network and converted into a direct current voltage in a charging box, and the direct current voltage enters a direct current module set including multiple direct current modules. Multiple direct current power branches are outputted from the direct current module set and enters a power distribution unit set. The direct current modules and the power distribution units are respectively connected to a charge control unit, each power distribution unit is equipped with the same number of switch devices as the direct current modules, all the direct current modules are connectable to each of the power distribution units through the switch devices; each of the power distribution units corresponds to a parking space and is used as a charging source.

In the method, PDU refers to a power distribution unit.

In the method, CCU refers to a charge control unit.

In the method, the direct current modules can be connected in parallel to any power distribution unit for outputting positive direct current voltages by switching corresponding switch devices on and off.

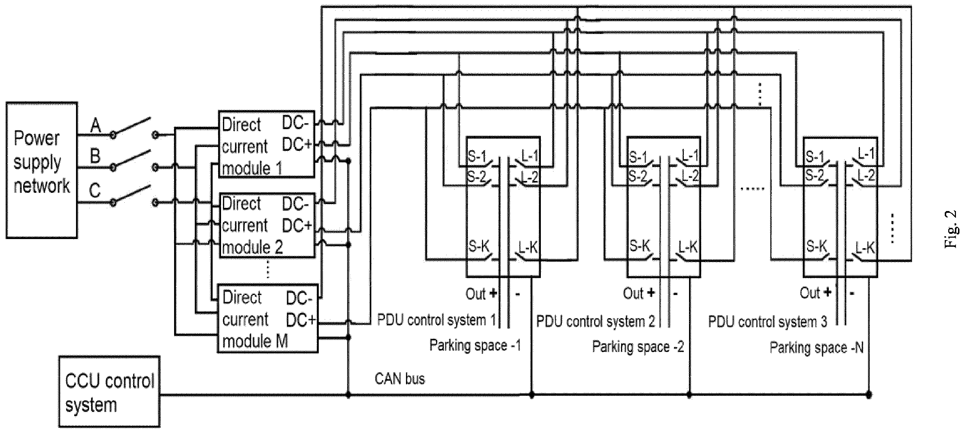

As shown in Fig. 2, in the method, there are two or more direct current modules in a direct current module set and two or more power distribution unit, and the number of the switch devices of each PDU is equal to that of the direct current modules.

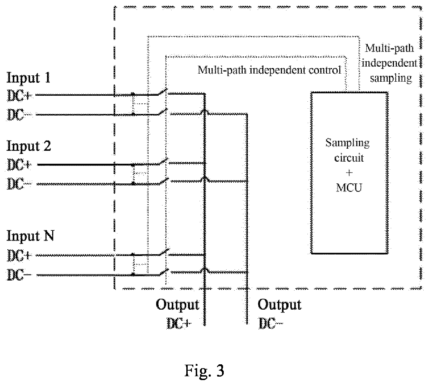

As shown in Fig. 3, the switch devices are switch relays, each PDU further includes an AD sampling circuit and a micro control (MCU), the switch relays are switched on or off by the micro control (MCU), and frontend voltages of the switch relays are sampled by the AD sampling circuit.

The charge control unit comprises a micro control (MCU).

The implementation procedure of the present disclosure is as follows: when the system is running, the CCU sends orders to the direct current modules, so as to order the direct current modules to output voltages with different specific values, and meanwhile, each PDU control system controls the sampling circuit to sample frontend voltages (outputted voltages of the direct current modules) of the switch relays; then, the CCU compares the sampled voltages of the switch relays with the specific voltages outputted by the direct current modules, so as to determine a corresponding relationship between the switch relays and the direct current modules.

Then, the PDU control system performs a logic computation according to an actual power demand of parking spaces and sends a control signal to switch on or off the multiple switch relays, thereby implementing a certain direct current module output combination and achieving a correctly output certain power.

The power matching method for the matrix power distribution charging system specifically includes the following steps.

As shown in Fig. 2, in the system, the PDUs and the direct current modules respectively communicate with the CCU through a CAN bus, the CCU, the PDUs, and the direct current modules respectively have a unique correspondence address ID, and have different address areas, for example, an address range of the CCU is 0-4, an address range of the PDUs is 5-20, an address range of the direct current modules is 21-50, and messages are sent to and received from each other through ID addresses. When the system is running, the CCU manages the whole running process of the system. Matching of the relays in the PDUs and the direct current modules is initiated by the CCU.
(1) First the CCU broadcast a state indicating that the system is currently in a state where matching of the relays and the modules starts.
(2) The CCU sends messages to the direct current modules (whose ID number is 21-50) in the system one by one, the messages indicate specific voltages to be outputted by the direct current modules (the direct current modules output different voltages), and meanwhile, all the PDUs in the system receive the messages and thus know the voltages (Vcomm) to be outputted by the modules.
(3) Each direct current module outputs a corresponding voltage according to the messages sent by the CCU.
(4) The AD sampling circuit in each PDU samples frontend voltages (Vad) of the switch relays, filter delay processing is performed on the sampled voltages (Vad), the sampled voltages (Vad) are compared with the voltages (Vcomm) outputted by the direct current modules to determine which switch relay and which direct current module have similar voltages, a one-to-one corresponding relationship is established, thereby matching the ID number of each direct current module and the number of each switch relay in each PDU.
(5) After matching of the switch relays in the PDUs and the direct current modules in the system is completed, a matching success message is sent to the CCU if matching succeeds, or a matching failure message is sent to the CCU if matching fails.
(6) A present matching end state is broadcast to the system when the CCU receives matching end messages from all the PDUs.

An implementation mode of the present solution will be described below by taking three direct current modules and three PDUs as an example.

The CCU sends orders to the direct current modules through the CAN bus, and the orders indicate specific voltages to be outputted. In a hypothesis, a voltage to be outputted by a module 1 is 40 V, a voltage to be outputted by a module 2 is 80 V, and a voltage to be outputted by a module 3 is 60 V.

For an example, if a sampled voltage of a switch relay S-1 in a PDU-1 is 60 V, the PDU-1 corresponds to the module 3, and meanwhile, sampled front-end voltages of a switch relay S-1 in a PDU-2 and a switch relay S-1 in a PDU-3 are 0 V.

If a sampled voltage of a switch relay S-2 in the PDU-2 is 40 V, the PDU-2 corresponds to the module 1, and meanwhile, sampled front-end voltages of a switch relay S-2 in the PDU-1 and a switch relay S-2 in the PDU-3 are 0 V.

If a sampled voltage of a switch relay S-3 in the PDU-3 is 80 V, the PDU-3 corresponds to the module 2, and meanwhile, sampled front-end voltages of a switch relay S-3 in the PDU-1 and a switch relay S-3 in the PDU-2 are 0 V.

Above all, in the present example, the module 1 corresponds to the switch relay S-2 in the PDU-2. The module 2 corresponds to the switch relay S-3 in the PDU-3. The module 3 corresponds to the switch relay S-1 in the PDU-1.

After the corresponding relationship between the switch relays and the modules is determined, a corresponding mapping relationship is established. When a vehicle is charging in a parking space, the CCU achieves correct charging by controlling states of the switch relays in the PDUs and controlling module output combinations.

## Claims

1. Power matching method for a matrix power distribution charging system, wherein the matrix power distribution charging system comprises at least two direct current modules and a plurality of power distribution units (PDUs), wherein the direct current modules and the power distribution units (PDUs) are respectively connected to a charge control unit (CCU); each of the power distribution units (PDUs) comprises switch devices whose number equals to the number of the direct current modules, and each of the direct current modules are connectable to each of the power distribution units (PDUs) through one of the switch devices; each of the power distribution units (PDUs) corresponds to a parking space and is used as a charging source;
wherein the power matching method comprises steps of: sending orders to the direct current modules by the charge control unit (CCU) after commissioning of the matrix power distribution charging system, so as to order the direct current modules to output voltages with different specific values; meanwhile, sampling voltages at the terminal directly connected to the direct current modules of each of the switch devices by the power distribution units (PDUs) through a sampling circuit and sending the sampled voltages to the charge control unit (CCU) by the power distribution units (PDUs); and comparing the received sampled voltages with the voltages outputted by each of the direct current modules for determining a corresponding relation between each of the switch devices and each of the direct current modules; finally, logically computing by the charge control unit (CCU) according to actual power requirements of parking spaces so as to send control orders to the power distribution units (PDUs), and switching on or off each of the switch devices by the power distribution units (PDUs) according to the received control orders to connect to a certain direct current module combination to correctly outputs a certain power.

2. Power matching method for a matrix power distribution charging system, wherein the matrix power distribution charging system comprises at least two direct current modules and a plurality of power distribution units (PDUs), wherein the direct current modules and the power distribution units (PDUs) are respectively connected to a charge control unit; each of the power distribution units (PDUs) comprises switch devices whose number equals to the number of the direct current modules, and each of the direct current modules are connectable to each of the power distribution units (PDUs) through one of the switch devices; each of the power distribution units (PDUs) corresponds to a parking space and is used as a charging source;
wherein the power matching method comprises steps of::
(1) broadcasting a state order by the charge control unit (CCU) for indicating that the switch devices begin to match with the direct current modules;
(2) sending messages to each of the direct current modules one by one by the charge control unit (CCU) to order the direct current modules to output voltages with specific values; meanwhile, receiving the messages by the power distribution units (PDUs) to know the specific values of the voltages to be outputted by the direct current modules;
(3) respectively outputting the voltages with specific values by the direct current modules according to the messages sent by the charge control unit;
(4) sampling the voltages at the terminal directly connected to the direct current modules of each of the switch devices by the power distribution units (PDUs) through the sampling circuit, comparing the sampled values of the voltages with the values of the voltages outputted by the direct current modules for finding out which switch device and which direct current module have a similar value, and establishing an one-to-one corresponding relation;
(5) sending a matching success message to the charge control unit (CCU) by each of the power distribution units (PDUs) if matching succeeds after the corresponding relation is established between the switch devices and the direct current modules; or sending a matching failure message to the charge control unit (CCU) if matching fails;
(6) broadcasting a matching complete state to the matrix power distribution charging system when the charge control unit (CCU) receives all matching messages of the power distribution units (PDUs), and logically computing by the charge control unit (CCU) according to actual power requirements of parking spaces so as to send control orders to the power distribution units (PDUs), and switching on or off each of the switch devices by the power distribution units (PDUs) according to the received control orders to connect to a certain direct current module combination to correctly output a certain power.

3. Power matching method according to claim 1 or 2, wherein the switch devices are switch relays; each of the power distribution units (PDUs) further comprises an analog-digital sampling circuit and a microcontroller unit; the switch relays are switched on or off by the microcontroller unit, and voltages at the terminal directly connected to the direct current modules of each of the switch relays are sampled by the analog-digital sampling circuit.

4. Power matching method according to claim 1 or 2, wherein the direct current modules and the power distribution units (PDUs) are respectively connected to and communicate with the charge control unit (CCU) by a controller area network bus.

5. Power matching method according to claim 1, wherein the charge control unit (CCU) comprises a microcontroller unit .

## Patentansprüche

1. Leistungsanpassungsverfahren für ein Matrix-Leistungsverteilungs-Ladesystem, wobei das Matrix-Leistungsverteilungs-Ladesystem mindestens zwei Gleichstrommodule und eine Vielzahl von Leistungsverteilungseinheiten (PDUs) umfasst, wobei die Gleichstrommodule und die Leistungsverteilungseinheiten (PDUs) jeweils mit einer Ladesteuereinheit (CCU) verbunden sind; jede der Leistungsverteilungseinheiten (PDUs) umfasst Schaltvorrichtungen, deren Anzahl gleich der Anzahl der Gleichstrommodule ist, und jedes der Gleichstrommodule kann über eine der Schaltvorrichtungen mit jeder der Leistungsverteilungseinheiten verbunden werden; jede der Leistungsverteilungseinheiten entspricht einem Parkstellplatz und wird als Ladequelle verwendet;
wobei das Leistungsanpassungsverfahren die folgenden Schritte umfasst: Senden von Befehlen an die Gleichstrommodule durch die Ladesteuereinheit (CCU) nach der Inbetriebnahme des Matrix-Leistungsverteilungs-Ladesystems, um die Gleichstrommodule anzuweisen, Spannungen mit unterschiedlichen spezifischen Werten auszugeben; in der Zwischenzeit Abtasten der Spannungen an dem Anschluss, der direkt mit den Gleichstrommodulen jeder der Schaltvorrichtungen verbunden ist, durch die Leistungsverteilungseinheiten (PDUs) mittels einer Abtastschaltung und Senden der abgetasteten Spannungen an die Ladesteuereinheit (CCU) durch die Leistungsverteilungseinheiten (PDUs); und Vergleichen der empfangenen abgetasteten Spannungen mit den von jedem der Gleichstrommodule ausgegebenen Spannungen zum Bestimmen einer entsprechenden Beziehung zwischen jeder der Schaltvorrichtungen und jedem der Gleichstrommodule; schließlich logisches Berechnen durch die Ladesteuereinheit (CCU) gemäß den tatsächlichen Leistungsanforderungen der Parkstellplätze, um Steuerbefehle an die Leistungsverteilungseinheiten (PDUs) zu senden, und Ein- oder Ausschalten jeder der Schaltvorrichtungen durch die Leistungsverteilungseinheiten (PDUs) gemäß den empfangenen Steuerbefehlen, um eine Verbindung mit einer bestimmten Gleichstrommodul-Kombination herzustellen, um eine bestimmte Leistung korrekt auszugeben.

2. Leistungsanpassungsverfahren für ein Matrix-Leistungsverteilungs-Ladesystem, wobei das Matrix-Leistungsverteilungs-Ladesystem mindestens zwei Gleichstrommodule und eine Vielzahl von Leistungsverteilungseinheiten (PDUs) umfasst, wobei die Gleichstrommodule und die Leistungsverteilungseinheiten (PDUs) jeweils mit einer Ladesteuereinheit verbunden sind; jede der Leistungsverteilungseinheiten (PDUs) umfasst Schaltvorrichtungen, deren Anzahl gleich der Anzahl der Gleichstrommodule ist, und jedes der Gleichstrommodule kann über eine der Schaltvorrichtungen mit jeder der Leistungsverteilungseinheiten (PDUs) verbunden werden; jede der Leistungsverteilungseinheiten (PDUs) entspricht einem Parkstellplatz und wird als Ladequelle verwendet;
wobei das Leistungsanpassungsverfahren die folgenden Schritte umfasst:
(1) Senden eines Zustandsbefehls durch die Ladesteuereinheit (CCU), der anzeigt, dass die Schaltvorrichtungen beginnen, sich mit den Gleichstrommodulen zu verbinden;
(2) Senden von Nachrichten an jedes der Gleichstrommodule, eines nach dem anderen, durch die Ladesteuereinheit (CCU), um die Gleichstrommodule anzuweisen, Spannungen mit spezifischen Werten auszugeben; in der Zwischenzeit Empfangen der Nachrichten durch die Leistungsverteilungseinheiten (PDUs), um die spezifischen Werte der von den Gleichstrommodulen auszugebenden Spannungen zu erfahren;
(3) jeweils Ausgabe der Spannungen mit bestimmten Werten durch die Gleichstrommodule gemäß den von der Ladesteuereinheit gesendeten Nachrichten;
(4) Abtasten der Spannungen an dem Anschluss, der direkt mit den Gleichstrommodulen jeder der Schaltvorrichtungen verbunden ist, durch die Leistungsverteilungseinheiten (PDUs) mittels der Abtastschaltung, Vergleichen der abgetasteten Werte der Spannungen mit den Werten der Spannungen, die von den Gleichstrommodulen ausgegeben werden, um herauszufinden, welche Schaltvorrichtung und welches Gleichstrommodul einen ähnlichen Wert haben, und Herstellen einer eins-zu-eins-Beziehung;
(5) Senden einer Abgleichs-Erfolgsmeldung an die Ladesteuereinheit (CCU) durch jede der Leistungsverteilungseinheiten (PDUs), wenn der Abgleich erfolgreich ist, nachdem die entsprechende Beziehung zwischen den Schaltvorrichtungen und den Gleichstrommodulen hergestellt wurde; oder Senden einer Abgleichs-Fehlermeldung an die Ladesteuereinheit (CCU), wenn der Abgleich fehlschlägt;
(6) Senden eines "Abgleich vollständig"-Zustands an das Matrix-Leistungsverteilungs-Ladesystem, wenn die Ladesteuereinheit (CCU) alle Abgleichs-Meldungen der Leistungsverteilungseinheiten (PDUs) empfängt, und logisches Berechnen durch die Ladesteuereinheit (CCU) entsprechend der tatsächlichen Leistungsanforderungen der Parkstellplätze, um Steuerbefehle an die Leistungsverteilungseinheiten (PDUs) zu senden, und Ein- oder Ausschalten jeder der Schaltvorrichtungen durch die Leistungsverteilungseinheiten (PDUs) entsprechend den empfangenen Steuerbefehlen, um eine Verbindung mit einer bestimmten Gleichstrommodul-Kombination herzustellen, um eine bestimmte Leistung korrekt auszugeben.

3. Leistungsanpassungsverfahren nach Anspruch 1 oder 2, wobei die Schaltvorrichtungen Schaltrelais sind; jede der Leistungsverteilungseinheiten (PDUs) umfasst ferner eine analog-digital-Abtastschaltung und eine Mikrocontroller-Einheit; die Schaltrelais werden durch die Mikrocontroller-Einheit ein- oder ausgeschaltet, und Spannungen an dem Anschluss, der direkt mit den Gleichstrommodulen jedes der Schaltrelais verbunden ist, werden durch die analog-digital-Abtastschaltung abgetastet.

4. Leistungsanpassungsverfahren nach Anspruch 1 oder 2, wobei die Gleichstrommodule und die Leistungsverteilungseinheiten (PDUs) jeweils über einen Controller Area Network Bus mit der Ladesteuereinheit (CCU) verbunden sind und darüber kommunizieren.

5. Leistungsanpassungsverfahren nach Anspruch 1, wobei die Ladesteuereinheit (CCU) eine Mikrocontroller-Einheit umfasst.

## Revendications

1. Procédé d'adaptation de puissance pour un système de charge à distribution de puissance matricielle, dans lequel le système de charge à distribution de puissance matricielle comprend au moins deux modules courant continu et une pluralité d'unités de distribution de puissance (PDU), dans lequel les modules courant continu et les unités de distribution de puissance (PDU) sont respectivement connectés à une unité de commande de charge (CCU) ; chacune des unités de distribution de puissance (PDU) comprend des dispositifs de commutation dont le nombre est égal au nombre des modules courant continu, et chacun des modules courant continu peut être connecté à chacune des unités de distribution de puissance (PDU) par l'intermédiaire de l'un des dispositifs de commutation ; chacune des unités de distribution de puissance (PDU) correspond à un espace de parcage et est utilisée en tant que source de charge ;
dans lequel le procédé d'adaptation de puissance comprend les étapes comprenant : l'envoi d'ordres sur les modules courant continu par l'unité de commande de charge (CCU) après la mise en service du système de charge à distribution de puissance matricielle, de manière à ordonner aux modules courant continu d'émettre en sortie des tensions présentant des valeurs spécifiques différentes ; dans le même temps, l'échantillonnage de tensions au niveau de la borne directement connectée aux modules courant continu de chacun des dispositifs de commutation par les unités de distribution de puissance (PDU) par l'intermédiaire d'un circuit d'échantillonnage et l'envoi des tensions échantillonnées sur l'unité de commande de charge (CCU) par les unités de distribution de puissance (PDU) ; et la comparaison des tensions échantillonnées reçues avec les tensions émises en sortie par chacun des modules courant continu pour déterminer une relation de correspondance entre chacun des dispositifs de commutation et chacun des modules courant continu ; pour finir, le calcul logique par l'unité de commande de charge (CCU) conformément à des exigences de puissance réelle d'espaces de parcage de manière à envoyer des ordres de commande sur les unités de distribution de puissance (PDU), et la commutation dans l'état activé ou désactivé de chacun des dispositifs de commutation par les unités de distribution de puissance (PDU) conformément aux ordres de commande reçus pour une connexion sur une certaine combinaison de modules courant continu afin d'émettre en sortie de façon correcte une certaine puissance.

2. Procédé d'adaptation de puissance pour un système de charge à distribution de puissance matricielle, dans lequel le système de charge à distribution de puissance matricielle comprend au moins deux modules courant continu et une pluralité d'unités de distribution de puissance (PDU), dans lequel les modules courant continu et les unités de distribution de puissance (PDU) sont respectivement connectés à une unité de commande de charge ; chacune des unités de distribution de puissance (PDU) comprend des dispositifs de commutation dont le nombre est égal au nombre des modules courant continu, et chacun des modules courant continu peut être connecté à chacune des unités de distribution de puissance (PDU) par l'intermédiaire de l'un des dispositifs de commutation ; chacune des unités de distribution de puissance (PDU) correspond à un espace de parcage et est utilisée en tant que source de charge ;
dans lequel le procédé d'adaptation de puissance comprend les étapes comprenant:
(1) la diffusion d'un ordre d'état par l'unité de commande de charge (CCU) pour indiquer que les dispositifs de commutation commencent à être en adaptation avec les modules courant continu ;
(2) l'envoi de messages sur chacun des modules courant continu à raison d'un à la fois par l'unité de commande de charge (CCU) pour ordonner aux modules courant continu d'émettre en sortie des tensions présentant des valeurs spécifiques; dans le même temps, la réception des messages par les unités de distribution de puissance (PDU) pour avoir connaissance des valeurs spécifiques des tensions à émettre en sortie par les modules courant continu ;
(3) respectivement, l'émission en sortie des tensions présentant des valeurs spécifiques par les modules courant continu conformément aux messages envoyés par l'unité de commande de charge ;
(4) l'échantillonnage des tensions au niveau de la borne directement connectée aux modules courant continu de chacun des dispositifs de commutation par les unités de distribution de puissance (PDU) par l'intermédiaire du circuit d'échantillonnage, la comparaison des valeurs échantillonnées des tensions avec les valeurs des tensions émises en sortie par les modules courant continu pour trouver quel dispositif de commutation et quel module courant continu présentent une valeur similaire, et l'établissement d'une relation de correspondance biunivoque;
(5) l'envoi d'un message de succès d'adaptation sur l'unité de commande de charge (CCU) par chacune des unités de distribution de puissance (PDU) si l'adaptation est couronnée de succès après que la relation de correspondance est établie entre les dispositifs de commutation et les modules courant continu ; ou l'envoi d'un message d'échec d'adaptation sur l'unité de commande de charge (CCU) si l'adaptation échoue ;
(6) la diffusion d'un état de fin d'adaptation sur le système de charge à distribution de puissance matricielle lorsque l'unité de commande de charge (CCU) a reçu tous les messages d'adaptation des unités de distribution de puissance (PDU), et le calcul logique par l'unité de commande de charge (CCU) conformément à des exigences de puissance réelle d'espaces de parcage de manière à envoyer des ordres de commande sur les unités de distribution de puissance (PDU) et la commutation dans l'état activé ou désactivé de chacun des dispositifs de commutation par les unités de distribution de puissance (PDU) conformément aux ordres de commande reçus pour une connexion sur une certaine combinaison de modules courant continu afin d'émettre en sortie de façon correcte une certaine puissance.

3. Procédé d'adaptation de puissance selon la revendication 1 ou 2, dans lequel les dispositifs de commutation sont des relais de commutation ; chacune des unités de distribution de puissance (PDU) comprend en outre un circuit d'échantillonnage analogique-numérique et une unité de microcontrôleur ; les relais de commutation sont commutés dans l'état activé ou désactivé par l'unité de microcontrôleur, et les tensions au niveau de la borne directement connectée aux modules courant continu de chacun des relais de commutation sont échantillonnées par le circuit d'échantillonnage analogique-numérique.

4. Procédé d'adaptation de puissance selon la revendication 1 ou 2, dans lequel les modules courant continu et les unités de distribution de puissance (PDU), de façon respective, sont connectés à l'unité de commande de charge (CCU) et communiquent avec celle-ci au moyen d'un bus CAN.

5. Procédé d'adaptation de puissance selon la revendication 1, dans lequel l'unité de commande de charge (CCU) comprend une unité de microcontrôleur.
